# EUROPÄISCHE PATENTANMELDUNG

(11) **EP 0 615 811 A2**
(43) Veröffentlichungstag der Anmeldung: **21.09.1994**
(21) Anmeldenummer: 94103971.1
(22) Anmeldetag: 15.03.1994
(51) Int. Cl.: B23Q 3/12, B23B 31/26

(54) **Spann- und Löseeinrichtung für Werkzeuge**

(30) Priorität: 19.03.1993 DE 4308736
(71) Anmelder: KELCH GMBH + CO., D-73614 Schorndorf (DE)
(72) Erfinder: Kelch, Wolfgang, D-73614 Schorndorf (DE)
(74) Vertreter: Patentanwälte Ruff, Beier, Schöndorf und Mütschele

(57) **Zusammenfassung**

Eine Spann- und Löseeinrichtung mit einer Zugstange enthält ein Getriebe, das von Tellerfedern beaufschlagt wird und die Zugstange bewegt. Das Getriebe enthält eine von den Tellerfedern beaufschlagte Schiebehülse, die auf der gegenüberliegenden Stirnkante mit Nockenflächen versehen ist. An den Nockenflächen greifen Nocken eines verdrehbaren keilartigen Getriebeteils an, um dieses zu verdrehen. Das Getriebeteil weist die Abwicklungsform eines Keils an und vergrößert den Abstand zwischen zwei ebenfalls keilförmig ausgebildeten Elementen. Dadurch wird eine Bewegung der Zugstange erreicht.

## Beschreibung

Die Erfindung geht aus von einer Spann- und Löseeinrichtung für Werkzeuge, bei der ein Betätigungsmittel, beispielsweise ein Tellerfederpaket an einer Zugstange zu deren Verschiebung angreift. Die Zugstange greift ihrerseits mit Hilfe von Spannzangen oder ähnlichen Einrichtungen an dem Werkzeug an. Beim Verschieben der Zugstange wird ein Konus des Werkzeugs oder eines Werkzeughalters in eine Konusaufnahme verspannt.

Es ist bereits eine Betätigungsvorrichtung für einen Werkzeugspanner bekannt, bei der ein zwischen der Spindel und der Zugstange angreifendes Keilgetriebe mit frei beweglichen Kugeln angeordnet ist. Diese stützen sich an drei Konusflächen ab, von denen die erste an einer axial verschiebbaren Spannhülse, die zweite an einem mit der Zugstange verbundenen Spannring und die dritte an einem stationär angeordneten Widerlagerring vorgesehen ist (DE-PS 39 36 122).

Der Erfindung liegt die Aufgabe zugrunde, eine Spann- und Löseeinrichtung für Werkzeuge bzw. Werkstücke zu schaffen, die hohe Spannkräfte ermöglicht.

Zur Lösung dieser Aufgabe schlägt die Erfindung eine Spann- und Löseeinrichtung mit den Merkmalen des Anspruchs 1 vor. Weiterbildungen sind Gegenstand der Unteransprüche.

Durch die verdrehbare Anordnung um die Zugstange wird nicht nur eine platzsparende Anordnung sondern auch die Möglichkeit für einen platzsparenden Antrieb geschaffen.

In Weiterbildung kann vorgesehen sein, daß das verdrehbare Getriebeelement eine Rampe aufweist, die mit einer mit der Zugstange drehfest verbundenen Gegenrampe zum Verschieben der Zugstange zusammenwirkt. Beim Verdrehen des verdrehbaren Getriebeelements erfolgt also ein Zusammenwirken der beiden Rampen in solcher Weise, daß die Zugstange axial verschoben wird. Insbesondere kann die Gegenrampe an einem Ringelement ausgebildet sein, das sich an der Zugstange in axialer Richtung mindestens abstützt oder aber mit dieser verbunden ist.

Die Verbindung zwischen der Zugstange und dem Ringelement kann beispielsweise mit Vorteil durch eine Verschraubung geschehen, wobei an der Zugstange ein Außengewinde und an dem Ringelement ein Innengewinde vorhanden ist. Auf diese Weise läßt sich in zusammengesetztem Zustand der Abstand des Ringelements zu dem verdrehbaren Getriebeelement einstellen.

Erfindungsgemäß kann vorgesehen sein, daß das verdrehbare Getriebeelement eine Rampe aufweist, die mit einer mit einem Spindelgehäuse drehfest verbundenen Gegenrampe zusammenwirkt. Auf diese Weise erfolgt bei der Verdrehung des verdrehbaren Getriebeelements gleichzeitig auch eine axiale Bewegung des Getriebeelements, was ebenfalls zum Bewegen der Zugstange ausgenutzt werden kann. Besonders vorteilhaft ist es natürlich, wenn das Getriebeelement in beiden axialen Richtungen solche Rampen aufweist, da sich dann zwei Axialbewegungen addieren. Insbesondere kann vorgesehen sein, daß die Gegenrampe an einem Ringelement ausgebildet ist, das sich an dem Spindelgehäuse axial abstützt.

Zur Verminderung der Reibung kann in Weiterbildung der Erfindung vorgesehen sein, daß zwischen der Rampe und der Gegenrampe ein Abrollelement zwischengeschaltet ist. Hierbei kann es sich beispielsweise um eine Kugel, einen Wälzkörper o.dgl. handeln. Erfindungssgemäß kann bei dem Getriebeelement die Rampe über den Umfang verteilt mehrfach vorhanden sein, so daß dann auch mehrere Abrollelemente vorhanden sind.

Erfindungsgemäß kann die Einrichtung eine von dem Betätigungsmittel, beispielsweise einem Tellerfederpaket, beaufschlagte Schiebehülse aufweisen, die bei ihrer Verschiebung das verdrehbare Getriebeelement verdreht.

In Weiterbildung der Erfindung kann vorgesehen sein, daß mindestens eines der beiden Ringelemente unverdrehbar an der Schiebehülse geführt ist. Vorzugsweise sind beide Ringelemente unverdrehbar an der Schiebehülse geführt.

Die Erfindung schlägt vor, daß die Schiebehülse axiale Fortsätze aufweisen kann, die durch Öffnungen in dem der Zugstange zugeordneten Ringelement hindurchgehen. Diese Fortsätze dienen unter anderem dazu, das Ringelement gegenüber der Schiebehülse unverdrehbar zu haltern. Ein Nachstellen der Beaufschlagung durch Verdrehen des Ringelements kann also nur dann erfolgen, wenn die Schiebehülse mit ihren Fortsätzen so weit zurückgeschoben ist, daß die Verdrehung erfolgen kann.

Erfindungsgemäß kann in Weiterbildung vorgesehens ein, daß die Schiebehülse eine Nockenfläche aufweist, an der ein an dem verdrehbaren Getriebeteil angeordneter Nocken anliegt. Bei Verschieben der Schiebehülse gleitet der Nocken dann an dieser Nockenfläche ab, was zu der Verdehung des verdrehbaren Getriebeteils führt. Die Nockenfläche kann an einer Stirnseite einer Ausnehmung bzw. eines Einschnitts ausgebildet sein. Auch hier können über den Umfang verteilt zwei oder mehr derartige Nockenflächen vorhanden sein, um die Belastung auch bei höheren Drehzahlen niedrig zu halten.

Erfindungsgemäß kann die Nockenfläche so geformt sein, daß eine für die Einzugsbewegung sinnvolle Kraft- und Wegcharakteristik erreicht werden kann. Insbesondere kann die Nockenfläche so geformt sein, daß zu Beginn der Einzugbewegung, wenn noch keine Spannkräfte erforderlich sind, ein großer Hub mit geringer Kraft erzeugt wird, während gegen Ende der Spannbewegung der Hub immer kleiner und die Kraft immer größer wird.

Die Erfindung schlägt weiterhin vor, daß die Einrichtung eine in Gegenrichtung zu dem Betätigungsmittel wirkende Druckeinrichtung zur gegenseitigen Beaufschlagung der Ringelemente aufweisen kann. Mit Hilfe dieser Druckeinrichtung kann dafür gesorgt werden, daß beim Lösen der Spanneinrichtung die Getriebeteile in gegenseitigem Eingriff gehalten bleiben und das Getriebe wieder in seine Ausgangsstellung seiner geringsten Axialausdehnung zurückgestellt wird.

Die Druckeinrichtung kann beispielsweise eine Druckfeder aufweisen, die an der Zugstange angreift.

Es ist ebenfalls möglich und wird von der Erfindung vorgeschlagen, daß die Druckeinrichtung einen Differenzkolben an der Zugstange aufweist, d.h. einen Abschnitt, wo die Zugstange einen verringerten Durchmesser aufweist, so daß die im Übergang gebildete Schulter als Kolben wirken kann.

Erfindungsgemäß kann in Weiterbildung vorgesehen sein, daß die Schiebehülse die Getriebeteile konzentrisch umfaßt. Dies ist für große Kräfte und hohe Kraftübersetzungen von Vorteil.

Erfindungsgemäß kann vorgesehen sein, daß die Steigung je zweier miteinander zusammenwirkender Rampen gleich groß ist. Auf diese Weise kann dafür gesorgt werden, daß an dieser Stelle eine reine Rollreibung zwischen den Getriebeteilen und den Wälzkörpern auftritt.

Erfindungsgemäß kann vorgesehen sein, daß die Steigung der dem Spindelgehäuse zugeordneten Rampen etwas größer als die Steigung der der Zugstange zugeordneten Rampen ist. Dies führt zu einer gleichmäßigeren Belastung des verdrehbaren, als Getriebekeil wirkenden Getriebeteils.

Es ist auch möglich und wird von der Erfindung vorgeschlagen, auch die Form der Rampen so auszugestalten, daß zu Beginn der Einzugsbewegung eine hohe Übersetzung ermöglicht wird, während gegen Ende der Einzugsbewegung, wenn es auf das Spannen mit großer Kraft ankommt, nur eine kleine Einzugsbewegung dafür aber mit größerer Kraft erfolgt. In diesem Fall weicht die abgewickelte Kurvenform der Rampen von einer Geraden ab.

Es kann vorgesehen sein, daß die miteinander zusammenwirkenden Rampen Parknischen für die Wälzkörper aufweisen, um zum Beginn des Spannhubs eine große Wegübersetzung zu bilden.

Weitere Merkmale, Einzelheiten und Vorzüge der Erfindung ergeben sich aus den Patentansprüchen, der folgenden Beschreibung einer bevorzugten Ausführungsform der Erfindung sowie anhand der Zeichnung. Hierbei Zeigen:
Fig. 1 einen Längsschnitt durch ein Spindelgehäuse mit einer Spanneinrichtung nach der Erfindung;
Fig. 2 eine Abwicklung dreier miteinander zusammenwirkender Getriebeteile;
Fig. 3 eine Abwicklung des Getriebes in einem Zustand, in dem das Werkzeug nicht eingezogen ist, entsprechend also der linken Hälfte der Fig. 1;
Fig. 4 eine der Fig. 3 entsprechende Dastellung des Getriebes in gespanntem Zustand, wie dies der rechten Hälfte der Fig. 1 entspricht;
Fig. 5 eine der Fig. 2 entsprechende Darstellung bei einer geänderten Ausführungsform.

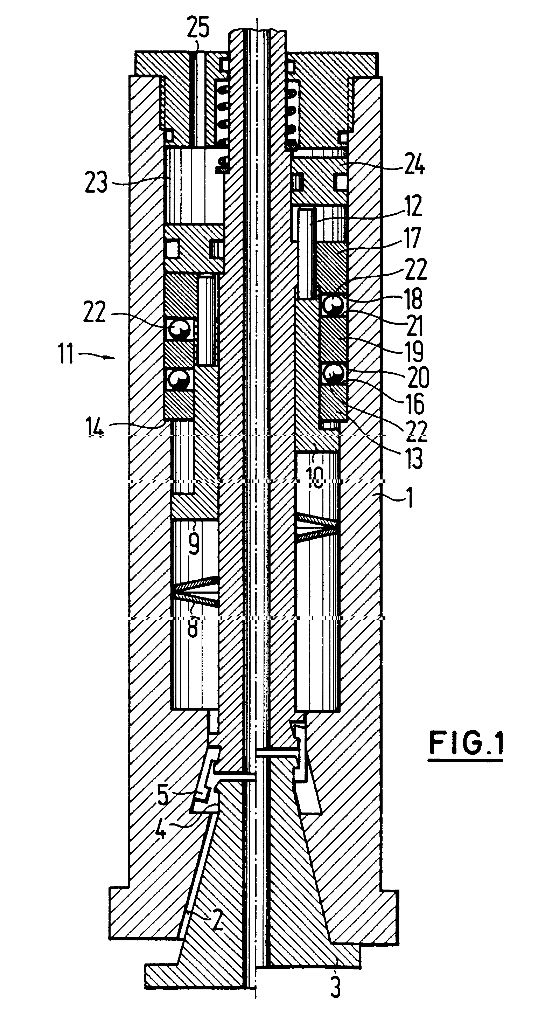

Fig. 1 zeigt in einer Übersicht ein Spindelgehäuse 1, das die Form eines langgestreckten hohlen Zylinders aufweist. An dem in Fig. 1 unteren Ende des Spindelgehäuses 1 ist eine Kegelfläche 2 gebildet, gegen die die Außenseite eines Werkzeugschafts 3 verspannt wird. Der Werkzeugschaft 3 weist an seinem in dem Spindelgehäuse 1 angeordneten Ende einen Einstich 4 auf, an dessen Rand Spannzangen 5 angreifen. Die Spannzangen 5 sind im Endbereich einer Zugstange 7 gelagert. Um die Zugstange 7 herum ist ein ringförmiger Raum zur Unterbringung von Tellerfedern 8 angeordnet. Die Tellerfedern wirken als Betätigungsmittel auf eine Stirnfläche 9 einer Schiebehülse 10 ein und beaufschlagen diese in Fig. 1 nach oben, d.h. von dem Werkzeugschaft 3 weg. Die Schiebehülse 10 ist Teil eines Getriebes 11, das zur Bewegung der Zugstange dient. Das Getriebe 11 wirkt zwischen dem Betätigungsmittel, nämlich den Tellerfedern, und der Zugstange 7.

Die Schiebehülse 10 ist im Bereich ihrer der Stirnfläche 9 gegenüberliegenden Stirnkante mit einzelnen Fortsätzen 12 versehen, die durch Ausnehmungen in einem Querelement der Zugstange 7 hindurchgreifen. Die stiftförmigen Fortsätze sind mit der Schiebehülse 10 fest verbunden, beispielsweise in Bohrungen eingepaßt oder an die Schiebehülse 10 angeschweißt.

Dem Spindelgehäuse 1 ist ein Ringelement 13 zugeordnet. Dieses Ringelement 13 liegt auf einer Schulter 14 auf. Die Schiebehülse 10 greift mit ihrem zylindrischen Teil 15 durch die Innenöffnung des Ringelements 13 hindurch. Die der Schulter 14 abgewandte Stirnkante 16 ist rampenförmig ausgebildet. Die Länge des Ringelements 13 ist also von der Umfangsstellung abhängig.

Mit der Zugstange ist auf der dem Tellerfederpaket 8 abgewandten Seite des Ringelements 13 ein weiteres Ringelement 17 ebenfalls gegenüber der Zugstange 7 unbewegbar verbunden. Bei diesem Ringelement 17 weist die dem ersterwähnten Ringelement 13 zugewandte Stirnkante 18 ebenfalls eine rampenförmige Ausbildung auf.

Das der Zugstange 7 zugeordnete Ringelement 17 ist mit der Zugstange verschraubt. Die Zugstange weist zu diesem Zweck einen Abschnitt mit einem Außengewinde auf, in das das Ringelement 17 mit einem Innengewinde eingeschraubt ist. Die beiden Gewinde verlaufen also koaxial zu der Zugstange. Diese Gewinde ist in der Darstellung der Fig. 1 durch die stiftartigen Fortsätze 12 verdeckt. Die Fortsätze 12 greifen also durch Längsöffnungen hindurch, die teilweise in der Zugstange 7 und teilweise in dem Ringelement 17 ausgebildet sind. Während das Gewinde bei herausgezogenen Fortsätzen 12 eine Einstellung der Vorspannung ermöglicht, dienen die eingeschobenen Fortsätze 12 zur Verdrehsicherung und damit zur Festlegung des Ringelements 17 sowohl gegenüber der Zugstange 7 als auch gegenüber der Schiebehülse 10.

Zwischen den beiden Ringelementen 13 und 17 ist ein verdrehbares Getriebeteil 19 angeordnet. Dieses Getriebeteil ist weder axial noch in Drehrichtung festgelegt. Es enthält eine erste dem Ringelement 13 zugewandte Stirnkante 20, die rampenförmig ausgebildet ist. Die gegenüberliegende Stirnkante 21, die dem mit der Zugstange 7 verbundenen Ringelement 17 zugewandt ist, ist ebenfalls rampenförmig ausgebildet. Zwischen je zwei einander zugewandten ranpenförmig ausgebildeten Stirnkanten 18 und 21, bzw. 20 und 16 sind Wälzkörper 22 eingesetzt. Hierbei kann es sich beispielsweise um Kugeln handeln, die der Einfachheit halber in der Zeichnung dargestellt sind.

In Fig. 1 oberhalb des mit der Zugstange verbundenen Ringelements 17 ist um die Zugstange herum ein ringförmiger Druckraum 23 gebildet, in dem ein Ringkolben 24 axial verschiebbar angeordnet ist. In den Druckraum 23 führt eine Leitung 25 für ein Druckmedium, das zur Verschiebung des Kolbens 24 verwendet wird.

Der in dem ringförmigen Druckraum 23 angeordnete obere Abschnitt der Zugstange 7 weist einen verringerten Durchmesser auf. Auf diesem Abschnitt mit verringertem Durchmesser liegt ein Ring 41 auf. Die im Übergang zwischen den beiden verschiedenen Durchmessern gebildete Stufe bildet eine Differenzkolbenfläche, die zu einer Beaufschlagung der Zugstange unabhängig von dem Ringkolben 24 führt. Diese Beaufschlagung wird noch durch die auf den Ring 41 wirkende Druckfeder 42 verstärkt, die in Gegenrichtung zu der Wirkung der Tellerfedern 8 wirkt. Auf diese Weise wird über die Schraubverbindung zwischen der Zugstange 7 und dem Ringelement 17 eine Beaufschlagung der beiden Ringelemente 17, 13 aufeinander zu erreicht, was dazu führt, daß die Wälzkörper 22 zwischen den entsprechenden Rampenflächen festgehalten bleiben und das Getriebe 11 in seine Ausgangsstellung zurückbewegt wird.

Um den Werkzeugschaft aus der Spindeleinrichtung zu lösen, wird über die Leitung 25 Druckmedium in den Druckraum 23 eingebracht, das infolge des Drucks den Kolben 24 in Richtung auf das in Fig. 1 untere Spindelende verschiebt. Der Kolben 24 greift über die Stifte 12 an der Schiebehülse 10 an und verschiebt diese gegen die Wirkung der Tellerfedern 8, die sich spannen. Sobald der Kolben 24 an der in Fig. 1 oberen Seite des Ringelements 17 angreift, verschiebt er die Zugstange gegen die weitere Wirkung der Tellerfedern nach unten, so daß ihr unteres Ende den Werkzeugschaft 3 ausstößt. Die Zugstange 7 nimmt die in der linken Hälfte in Fig. 1 dargestellte Endstellung ein. Um ein Werkzeug wieder zu spannen, wird der Druck in dem Druckraum 23 über die Leitung 25 abgebaut. Die Tellerfedern schieben die Schiebehülse in Fig. 1 nach oben, die dabei in einer noch zu beschreibenden Weise das verdrehbare Getriebeteil 19 verdreht. Aufgrund der Rampenform führt dies zu einer Vergößerung des Abstandes zwischen dem dem Spindelgehäuse 1 zugeordneten Ringelement 13 und dem der Zugstange 7 zugordneten Ringelement 17 und damit zu einer Verschiebung der Zugstange nach oben. Gleichzeitig schiebt die Schiebehülse 10 über die Stifte 12 den Kolben 24 in die rechts in Fig. 1 dargestellte Ausgangsstellung zurück.

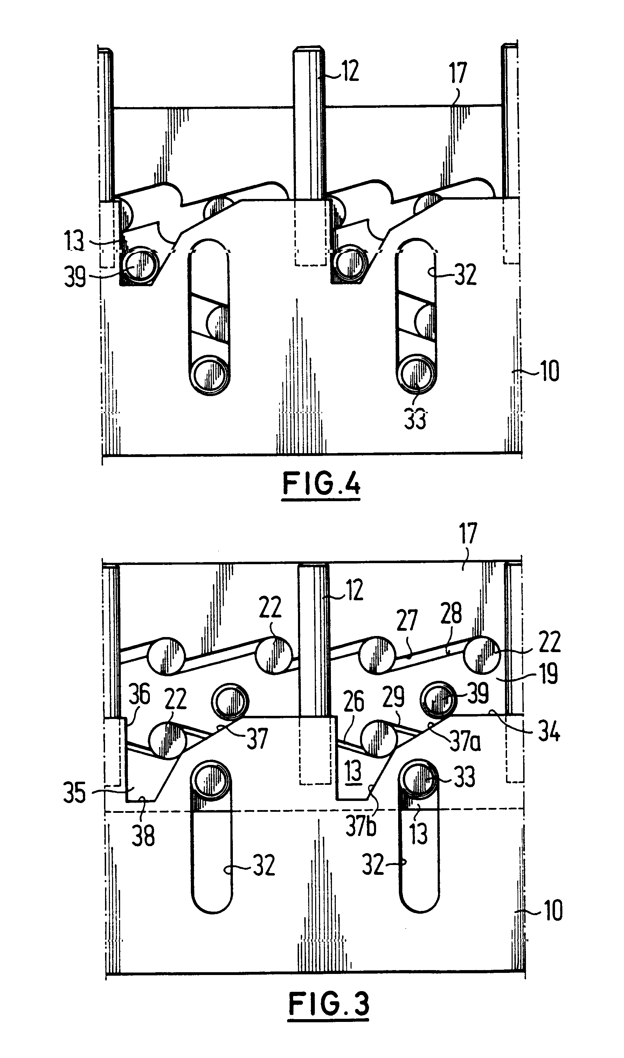

Fig. 2 zeigt nun in einer Abwicklung drei Getriebeteile des bei der Anordnung der Fig. 1 verwendeten Getriebes 11. Es handelt sich um das dem Spindelgehäuse 1 zugeordnete Ringelement 13, das mit der Zugstange 7 verbundene Ringelement 17 und das zwischen diesen beiden angeordnete verdrehbare Getriebeteil 19. Die Abwicklung zeigt eine vollständige Umdrehung. Die in Fig. 2 obere, d.h. von den Tellerfedern weggewandte Stirnseite 16 weist die Form von vier Rampen 26 auf.

Die den Tellerfedern zugewandte Stirnkante 18 des der Zugstange 7 zugeordneten Ringelements 17 weist ebenfalls die Form von vier Rampen 27 auf. Beide Rampen sind gegenläufig orientiert. Der Übergang zwischen zwei aneinander angrenzenden Rampen 27 bzw. 26 erfolgt in Form einer Kreisbogenlinie, entsprechend der Form der Wälzkörper 22.

Zwischen den beiden Ringelementen 13, 17 ist das verdrehbare Gewindeteil 19 angeordnet, dessen beide Stirnkanten 20, 21 die Form von Rampen 28, 29 aufweisen. Dadurch weist das Getriebeelement 19 bereichsweise Keilform auf. Denkt man sich die drei Getriebeteile der Fig. 2 so angeordnet, daß sich die Rampen berühren, so führt eine Verdrehung des mittleren Getriebeteils 19, was sich in der Fig. 2 als Verschiebung darstellen würde, nach links zu einem Auseinanderspreizen der beiden Ringelemente 13, 17. Ordnet man zwischen den einander gegenüberliegenden Rampen 26 und 29 bzw. 27 und 28 Wälzkörper 22 an, so tritt bei der Verdrehung des Getriebeelements 19 die gleiche Wirkung auf. Da die einander gegenüberliegenden Rampen 26, 29 und 27, 28 untereinander die gleiche Steigung aufweisen, erfolgt jedoch ein reines Abrollen der Wälzkörper 22.

Das dem Spindelgehäuse 1 zugeordnete Ringelement 13 weist zwei radial verlaufende Öffnungen 30 auf, in die radial verlaufende Zapfen eingesetzt werden können. Diese Zapfen dienen zur Festlegung und Führung des Ringelements 13 an der Schiebehülse 10, wie im folgenden noch gezeigt werden wird.

Das verdrehbare Getriebeelement 19 weist ebenfalls Löcher 31 zum Einsetzen von Zapfen auf. Diese Zapfen dienen jedoch nicht zur Festlegung des Getriebeelements 19, sondern wirken in ihrem nach innen vorspringenden Teil als Nocken, mit deren Hilfe das Getriebeelement 19 verdreht werden kann. Dies wird jetzt im Folgenden unter Bezugnahme auf die Fig. 3 erläutert, die eine Abwicklung des Getriebes 11 in gelöstem Zustand der Spanneinrichtung darstellt, wie dies also der linken Hälfte der Fig. 1 entspricht. Die Schiebehülse 10 weist in Axialrichtung verlaufende Langlöcher 32 auf, deren Breite dem Durchmesser eines Zapfens 33 entspricht, der in der Öffnung 30 des Ringelements 13 eingesetzt ist. Die Länge der Langlöcher 32 entspricht dem möglichen Verschiebeweg der Schiebehülse 10.

Die der Stirnfläche 9 der Schiebehülse 10, an der die Tellerfedern angreifen, abgewandte Stirnkante 34 ist mit zwei Ausnehmungen 35 identischer Form versehen. Eine Begrenzungsflanke 36 der Ausnehmungen 35 verläuft hier in Längsrichtung, während die andere Begrenzungsflanke eine Nokkenfläche 37 bildet. Die Begrenzungsflanke 36 könnte auch parallel zu der Nockenfläche 37 verlaufen. Die Nockenfläche 37 enthält einen ersten von der quer zur Längsachse verlaufenden Stirnkante 34 ausgehenden Abschnitt 37a mit einer relativ niedrigen Steigung und einem zweiten sich daran anschließenden Abschnitt 37b mit einer stärkeren Steigung. Die Ausnehmungen 35 werden durch einen Abschnitt 38 abgeschlossen, der in Umfangsrichtung verläuft.

Zwischen die Rampen 26 und 29 und die Rampen 27 und 28 sind einzelne Wälzkörper 22 eingesetzt. Das mittlere verdrehbare Getriebeteil 19 befindet sich in einer Stellung, in der eine weitere Bewegung nach rechts in Fig. 3 nicht mehr möglich ist, da dort die Wälzkörper 22 an den tiefsten Stellen der Rampen festliegen. In die Löcher 31 sind weitere Zapfen 39 eingesetzt. Die Zapfen 39 ragen nach innen, so daß sie mit den Nockenflächen 37 in Eingriff stehen.

Wird nun der Druck in dem Druckraum 23 abgebaut, so drücken die Tellerfedern 8, die an der Stirnfläche 9 der Schiebehülse 10 angreifen, diese geradlinig nach oben. Dabei gleiten die Zapfen 39 oder, wenn sie mit Rollen versehen sind, rollen diese auf dem ersten Abschnitt 37a der Nockenfläche 37 ab. Dadurch wird das verdrehbare Gewindeteil 19 gezwungen, sich in Fig. 3 nach links zu bewegen. Da zu Beginn der Spannbewegung keinen großen Kräfte angewendet zu werden brauchen, ist der erste Abschnitt 37a der Nockenfläche 37 relativ flach geneigt. Dies bedeutet andererseits, daß eine nur kleine Aufwärtsbewegung der Schiebehülse 10 zu einer großen Verdrehbewegung des Getriebeteils 19 führt. Aufgrund der Keilform der Rampen 28, 29 wird dabei das Getriebeteil 19 nicht nur nach links bewegt, sondern auch nach oben verschoben. Die Verschiebung des Getriebeteils 19 nach oben führt zu einer verstärkten Aufwärtsbewegung des Ringelements 17 und damit der Zugstange 7. Sobald bei der Aufwärtsbewegung der Schiebehülse 10 die Zapfen 39 an dem die beiden Abschnitte 37a, 37b der Nockenfläche 37 verbindenden Knick vorbei gelangen, erfolgt dann ein weiteres Verdrehen des Getriebeteils 19 und damit Anheben des Ringelements 17 mit einer viel geringeren Vorschubgeschwindigkeit, dafür aber mit einer höheren Kraft.

Am Ende der Aufwärtsbewegung der Schiebehülse 9 weist das Getriebe die in Fig. 4 dargestellte Konfiguration auf, wo nun die Zapfen 33 an den gegenüberliegenden Enden der Langlöcher 32 liegen. Gleichzeitig liegen die Zapfen 39 an dem Boden 38 der Ausnehmungen 35 an.

Die Erfindung schafft ein Getriebe mit zwei Getriebestufen, das es ermöglicht, die Einzugsbewegung so zu gestalten, daß die hohe Spannkraft erst am Ende der Einzugsbewegung auftritt, nämlich dann, wenn sie gebraucht wird.

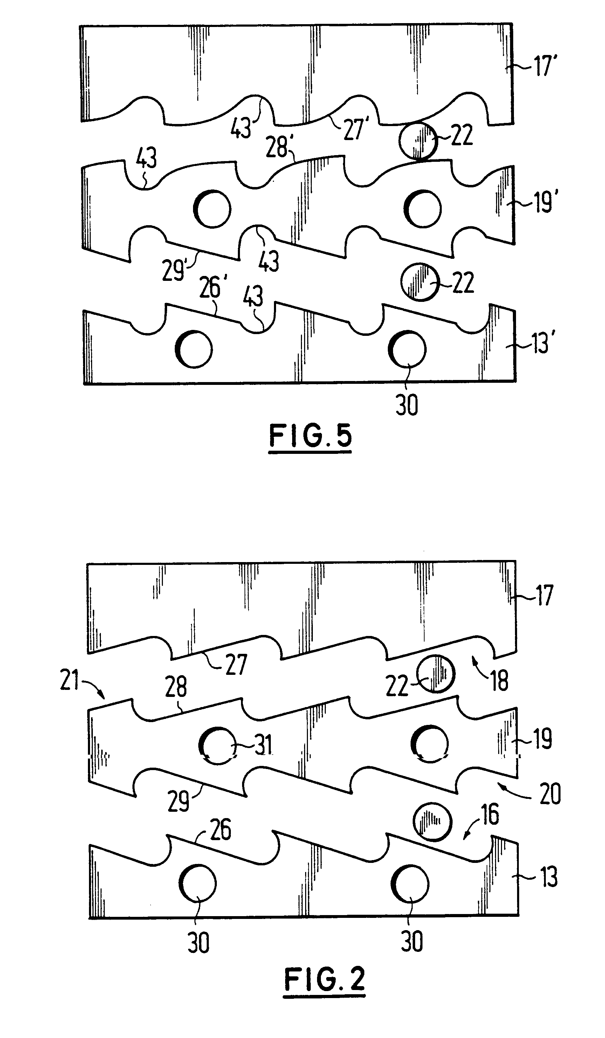

Bei der in Fig. 5 dargestellten Ausführungsform sind wiederum die drei Getriebeteile, nämlich die beiden Ringelemente 13' und 17' sowie das verdrehbare Getriebeteil 19' in der gleichen Stellung dargestellt wie in Fig. 2. Die an dem dem Spindelgehäuse 1 zugeordneten Ringelement 13' vorhandenen Rampen 26' und die ihnen gegenüberliegenden Rampen 29' sind in der Abwicklung geradlinig und mit gleichem Winkel ausgebildet, wobei an der jeweils tiefsten Stelle der Rampen axiale Vertiefungen 43 gebildet sind. Diese Vertiefungen oder Mischen 43 dienen dazu, zu Beginn der Einzugsbewegung eine große Wegübersetzung zu erreichen.

Auch bei den Rampen 27', 28' zwischen dem verdrehbaren Getriebeteil 19' und dem der Zugstange 7 zugeordneten Ringelement 17' sind derartige Mischen für die Wälzkörper 22 vorhanden. Der Verlauf der beiden Rampen 27', 28' ist dann nicht mehr geradlinig, sondern verläuft gebogen. Dadurch gestaltet sich die Spannbewegung so, daß zu Beginn der Spannbewegung eine große Wegübersetzung erreicht wird, die dann allmählich in einen geringeren Vorschub mit größerer Kraft übergeht.

Das Beispiel der Fig. 5 zeigt, daß man aufgrund möglicher Kurvenformen bei den Nockenflächen der Schiebehülse und bei den zwei Paaren von Rampen eine große Auswahlmöglichkeit hat, die Einzugscharakteristik der Spanneinrichtung den Erfordernissen entsprechend zu gestalten.

Der Wortlaut der Patentansprüche wird durch Bezugnahme zum Inhalt der Beschreibung gemacht.

## Patentansprüche

1. Spann- und Löseeinrichtung für Werkzeuge und/oder Werkstücke, mit
1.1 einer Zugstange (7) zum direkten oder indirekten Angriff an dem Werkzeug (3) bzw. Werkstück,
1.2 einem Betätigungsmittel zum Verschieben der Zugstange (7),
1.3 einem Getriebe (11), das
1.3.1 zwischen dem Betätigungsmittel und der Zugstange (7) eingesetzt ist,
1.3.2 die Zugstange (7) aus einer Freigabestellung in eine Sperrstellung bewegt, und
1.3.3 mindestens ein bewegbares Getriebeelement (19) aufweist, das
1.3.4 konzentrisch zur Zugstange (7) angeordnet und
1.3.5 zum axialen Angriff an der Zugstange (7) um die Achse der Zugstange (7) herum verdrehbar ausgebildet ist.

2. Einrichtung nach Anspruch 1, bei der das verdrehbare Getriebeelement (19) eine Rampe (28) aufweist, die mit einer der Zugstange (7) zugeordneten Gegenrampe (27) zum Verschieben der Zugstange (7) zusammenwirkt, wobei insbesondere die Gegenrampe (27) an einem Ringelement (17) ausgebildet ist, das sich an der Zugstange (7) axial mindestens abstützt und vorzugsweise mit dieser verschraubt ist.

3. Einrichtung nach einem der vorhergehenden Ansprüche, bei der das verdrehbare Getrieebelement (19) eine Rampe (29) aufweist, die mit einer einem Spindelgehäuse (1) zugeordneten Gegenrampe (26) zusammenwirkt, die vorzugsweise an einem Ringelement (13) ausgebildet ist, das sich an dem Spindelgehäuse (1) axial abstützt.

4. Einrichtung nach einem der Ansprüche 2 bis 3, bei der zwischen der Rampe (28, 29) und der Gegenrampe (26, 27) mindestens ein Abwälzkörper (22) zwischengeschaltet ist.

5. Einrichtung nach einem der vorhergehenden Ansprüche, mit einer von dem Betätigungsmittel beaufschlagten Schiebehülse (10), die bei ihrer Verschiebung das verdrehbare Getriebeelement (19) verdreht.

6. Einrichtung nach Anspruch 5, bei der mindestens eines der beiden Ringelemente (13, 17) unverdrehbar an der Schiebehülse (10) geführt ist.

7. Einrichtung nach Anspruch 5 oder 6, bei der die Schiebehülse (10) axiale stiftartige Fortsätze (12) aufweist, die durch Öffnungen in dem der Zugstange (7) zugeordneten Ringelement (17) hindurchgehen.

8. Einrichtung nach einem der Ansprüche 5 bis 7, bei der die Schiebehülse (10) eine Nockenfläche (37) aufweist, an der ein an dem verdrehbaren Getriebeteil (19) angeordneter Nocken (39) anliegt.

9. Einrichtung nach Anspruch 8, bei der die Nokkenfläche (37) der Schiebehülse (10) derart ausgebildet ist, daß zu Beginn der Spannbewegung eine geringe und gegen Ende der Spannbewegung eine große Kraftübersetzung erzeugt wird.

10. Einrichtung nach einem der Ansprüche 2 bis 9, mit einer in Gegenrichtung zu dem Betätigungsmittel wirkenden Druckeinrichtung zur gegenseitigen Beaufschlagung der Rampen (28, 29) und Gegenrampen (26, 27).

11. Einrichtung nach Anspruch 10, bei der die Druckeinrichtung eine Druckfeder (42) aufweist.

12. Einrichtung nach Anspruch 10 oder 11, bei der die Druckeinrichtung einen an einem Zugstangenabschnitt gebildeten Differenzdruckkolben aufweist.

13. Einrichtung nach einem der Ansprüche 5 bis 12, bei der die Schiebehülse (10) die Getriebeteile konzentrisch umfaßt.

14. Einrichtung nach einem der Ansprüche 2 bis 13, bei der die Steigung der miteinander zusammenwirkenden Rampen (27, 28; 26, 29) gleich groß ist.

15. Einrichtung nach einem der Ansprüche 3 bis 14, bei der die Steigung der dem Spindelgehäuse zugeordneten Rampen (26, 29) etwas größer als die Steigung der der Zugstange (7) zugeordneten Rampen (27, 28) ist.

16. Einrichtung nach einem der Ansprüche 2 bis 15, bei der die Rampen (27', 28') eine von einer geradlinigen Form abweichende Kurvenform aufweisen.

17. Einrichtung nach Anspruch 16, bei der die Kurvenform der Rampen (27', 28') derart ausgebildet ist, daß eine gewünschte Kennlinie für die Spannbewegung erreicht wird.

18. Einrichtung nach einem der Ansprüche 2 bis 17, bei der die miteinander zusammenwirkenden Rampen (26', 29'; 27', 28') Parknischen (43) für die Wälzkörper (22) aufweisen.
